# EUROPÄISCHE PATENTSCHRIFT

(11) **EP 2 179 382 B1**
(45) Veröffentlichungstag und Bekanntmachung des Hinweises auf die Patenterteilung: **16.11.2011**
(21) Anmeldenummer: 08785626.6
(22) Anmeldetag: 19.08.2008
(51) Int. Cl.: G06K 19/07

(54) **ECHTZEITMESSUNG AUF EINEM PORTABLEN DATENTRÄGER**
REAL TIME MEASUREMENT ON A PORTABLE DATA CARRIER
MESURE DU TEMPS RÉEL SUR UN SUPPORT DE DONNÉES PORTABLE

(30) Priorität: 20.08.2007 DE 102007039226
(43) Veröffentlichungstag der Anmeldung: 28.04.2010
(73) Patentinhaber: Giesecke & Devrient GmbH, 81677 München (DE)
(72) Erfinder: URHAHN, Thorsten, 89081 Ulm (DE); GREBE, Alexander, 84405 Dorfen (DE)
(86) Internationale Anmeldenummer: PCT/EP2008/006812
(87) Internationale Veröffentlichungsnummer: WO 2009/024326

(56) Entgegenhaltungen:
- EP-A- 1 536 573
- WO-A-01/61639

## Beschreibung

Die vorliegende Erfindung betrifft ein Verfahren zum Bestimmen einer Echtzeitspanne in einem portablen Datenträger sowie einen derartigen portablen Datenträger.

Zumeist verwenden Chipkarten und ähnliche portable Datenträger als interne Zeitbasis ein generiertes Taktsignal, das nicht auf die natürliche Echtzeit abgestimmt ist. Hinzukommt, dass ein extern an der Chipkarte anliegender Takt von dem jeweiligen Taktgeber abhängig ist und verschieden sein kann. Ein derartiger portabler Datenträger hat also in der Regel keine Möglichkeit, die natürliche Echtzeit als Zeitpunkt oder Zeitspanne genau zu bestimmen, so dass eine echtzeitabhängige Steuerung des Datenträgers nicht möglich ist.

In diesem Zusammenhang ist es bekannt, eine Chipkarte mit einer separaten Zeitmesseinrichtung auszustatten, die eine Echtzeitbasis bereitstellt. Beispielsweise sehen die WO 01/54057 A1 und die US 2006/0163369 A1 jeweils eine separate Zeitmesseinheit vor, die unabhängig von äußeren Einflüssen sind, wie z.B. einem Taktsignal. Auch nach Wegfall der Energieversorgung der Chipkarte können diese Zeitmesseinrichtungen durch eine separate interne Energieversorgung zumindest zeitweise weiterbetrieben werden. Die Zeitmesseinrichtung der US 2006/0163369 A1 ermöglicht dabei, das Ablaufen einer vorgegebenen Echtzeitspanne zu erkennen oder eine bestimmte Operation innerhalb der Echtzeitspanne auszuführen. Die Zeitmesseinrichtung ist als kapazitive Komponente ausgestaltet, deren fortschreitende Entladung als Echtzeitbasis verwendet wird. Derartige spezielle konstruktive Lösungen mit separaten (Hardware-) Echtzeitsteuerungen sind jedoch baulich aufwändig und entsprechend teuer.

Im Zusammenhang mit der Durchführung interaktiver TV/Computer-Spiele schlägt die US 5,850,447 vor, Benutzerstationen (Spielkonsolen) mit Zähleinrichtungen auszustatten, die eine Taktinformation erzeugen, um zentral ermitteln zu können, ob eine Benutzeraktion vor Ablauf einer bestimmten Zeitfrist stattgefunden hat. Hierbei ist jedoch die Bestimmung einer Echtzeitspanne nicht erforderlich, da lediglich eine chronologische Abfolge der Benutzeraktionen bestimmt wird.

Die DE 100 57 477 A1, die WO 01/61639 A1 sowie die EP 0 337 684 A2 betreffen jeweils die Bereitstellung eines internen Takts auf einer Chipkarte, unabhängig von einem extern anliegende Taktsignal und die Umschaltung zwischen einem externen und dem internen Takt. Eine interne Echtzeitbasis betreffen diese Schriften nicht.

EP 1536573 A2 offenbart eine SmartCard. Die SmartCard umfasst einen Abschnitt zum Verarbeiten von Benutzerinformation um Benutzerinformation abzuspeichern und um ein Benutzerinformationssignal zu erzeugen, das Benutzerinformation enthält. Ferner umfasst die SmartCard einen Abschnitt zum Verarbeiten von RFID-Information um RFID-Daten abzuspeichern und ein RFID-Signal zu erzeugen, das RFID-Daten enthält. Darüberhinaus umfasst die SmartCard einen Hauptrechenabschnitt, welcher mit dem Abschnitt zur Verarbeitung von Benutzerinformation verbunden ist um die Erzeugung und Übertragung von Benutzerinformation zu steuern und welcher mit dem Abschnitt zum Verarbeiten von RFID-Daten verbunden ist um Erzeugung und Übertragung eines RFID-Signals zu veranlassen.

Ergänzte beschreibungs-einleitung einfügen

Ferner offenbart die US 6,202,927 ein System zur Prozessüberwachung bei Chipkarten, dessen Sensoren Zeitinformationen bezüglich der überwachten Chipkartenprozesse liefern. Die EP 1112 627 B1 offenbart ein Verfahren zum Verbreiten einer Zeitinformation in einem Funkkommunikationssystem, bei dem unterschiedliche Zeitbasen von Mobilfunkbasisstationen bestimmt werden. Die US 5,414,835 schlägt vor, dass ein Schreib-/Lesegerät im Rahmen des ATR-Signals ("Answer-to-Reset") eine Zeitinformation an eine Chipkarte schickt, bis zu deren Ablauf das Schreib-/Lesegerät auf eine Antwort der Chipkarte wartet. Schließlich offenbart die EP 0 849 651 A1 ein Verfahren zum Synchronisieren eines internen Zeitgebers eines Funkempfängers durch ein Zeitinformationssignal einer Basisstation.

Demzufolge ist es die Aufgabe der vorliegenden Erfindung, auf einem portablen Datenträger eine Programmroutine mit einem konstanten Ausführungsgeschwindigkeit zu finden, die nicht auf einen Speicher des Datentragers zugreift. Diese Aufgabe wird erfindungsgemäß durch ein Verfahren sowie einen portablen Datenträger mit den Merkmalen der unabhängigen Ansprüche gelöst. In davon abhängigen Ansprüchen sind vorteilhafte Ausgestaltungen und Weiterbildungen der Erfindung angegeben.

Eine Echtzeitspanne wird in einem portablen Datenträger als Vielfaches einer im Wesentlichen konstanten Ausführungsdauer eines auf dem Datenträger aufgeführten echtzeitkonstanten Prozesses bestimmt. Dazu führt ein portabler Datenträger mit einem Prozessor zum Ausführen von in einem Speicher des Datenträgers vorliegenden Programmroutinen eine ausgewählte Programmroutine aus, deren besondere Eigenschaft es ist, als echtzeitkonstanter Prozess mit einer im Wesentlichen konstanten Ausführungsdauer ausführbar zu sein; Diese konstante Ausführungsdauer der ausgewählten Programmroutine repräsentiert die kleinste für den Datenträger messbare Zeiteinheit und kann mit jeder beliebigen anderen Zeiteinheit in Beziehung gesetzt werden, insbesondere auch mit dem üblichen Zeiteinheitsystem aus Sekunden, Minuten, Stunden, etc.

Zum Bestimmen einer Echtzeitspanne basierend auf der konstanten Ausführungsdauer der ausgewählten Programmroutine umfasst der Datenträger eine Echtzeitsteuerung, die die Echtzeitspanne als Vielfaches der konstanten Ausführungsdauer des entsprechenden echtzeitkonstanten Prozesses bestimmt, indem die Programmroutine so oft sequentiell wiederholend als echtzeitkonstanter Prozess ausgeführt wird, bis die zu bestimmende Echtzeitspanne abgemessen ist.

Als Programmroutine mit im Wesentlichen konstanter Ausführungsdauer werden solche Programmroutinen verwendet die nicht auf einen Speicher des Datenträgers zugreifen, da Speicherzugriffe zumeist eine Koordination durch eine Speicherverwaltung erfordern, die nicht der Kontrolle des entsprechenden Prozesses unterliegt. Besonders geeignet als Programmroutine, die auf dem Datenträger gemäß der Erfindung als echtzeitkonstanter Prozess ausgeführt wird, ist die Erzeugung von Zufallszahlen, so dass die einmalige Erzeugung einer Zufallszahl die echtzeitkonstante Zeitbasis des Datenträgers bildet. Diese interne Zeitbasis kann dann mit der Echtzeit in Bezug gesetzt werden, indem die Echtzeitsteuerung die Programmroutine fortlaufend sequentiell als kontinuierliche Wiederholung entsprechender echtzeitkonstanter Prozesse ausführt und dadurch ermöglicht, eine bestimmte Echtzeitspanne über die Anzahl der Ausführungen des echtzeitkonstanten Prozesses und deren konstanter Ausführungszeit in Bezug zu setzen.

Die fortlaufende, sequentiell wiederholte Ausführung der Programmroutine wird dadurch realisiert, dass nach der Abarbeitung eines echtzeitkonstanten Prozesses der nächste echtzeitkonstante Prozess möglichst unmittelbar im Anschluss daran gestartet wird, so dass eine vernachlässigbare zeitliche Lücke zwischen der Beendigung eines echtzeitkonstanten Prozesses und dem Beginn des darauf folgenden echtzeitkonstanten Prozesses entsteht.

Die Echtzeitsteuerung kann die fortlaufend sequentiell wiederholte Ausführung der Programmroutine als echtzeitkonstanten Prozess zu jedem beliebigen Zeitpunkt starten, z.B. unmittelbar bei der Inbetriebnahme des Datenträgers oder bei einem bestimmten datenträgerinternen Ereignis, von dem ausgehend eine Echtzeitspanne zu bestimmen ist. Hierzu kann der Datenträger eine Überwachungseinrichtung umfassen, die ein Eintreten eines solchen vorgegebenen Ereignisses oder eines vorgegebenen internen Zustandes des Datenträgers erkennt und ein entsprechendes Auslösesignal an die Echtzeitsteuerung sendet, wobei diese bei Empfang des Auslösesignals die fortlaufend sequentiell wiederholte Ausführung der Programmroutine durch entsprechend zeitlich abgestimmte Programmaufrufe der Programmroutine bewirkt.

Falls nur eine relativ ungenaue Echtzeitmessung erforderlich ist, ist es ausreichend, die Ausführung der Programmroutine nur dann fortlaufend sequentiell zu wiederholen, wenn der Prozessor keinen von dem speziellen echtzeitkonstanten Prozesse verschiedenen Prozess ausführt bzw. nur eine geringe Auslastung aufweist, also möglichst während der "Idle-Zeiten" des Prozessors. Eine Überwachungseinrichtung des Datenträgers kann, wenn ein solcher Zustand eintritt, ein Auslösesignal an die Echtzeitsteuerung senden. Entsprechend sendet die Überwachungseinrichtung ein Beendigungssignal an die Echtzeitsteuerung, sobald die Auslastung des Prozessor signifikant ansteigt, z.B. weil ein von dem echtzeitkonstanten Prozess verschiedener Prozess ausgeführt wird. Die fortlaufend sequentiell wiederholte Ausführung der Programmroutine als echtzeitkonstanter Prozess wird dann nur zwischen dem Empfang des Auslösesignals und des Beendigungssignals durchgeführt.

Bei einer Chipkarte wird die fortlaufend sequentiell wiederholte Ausführung der Programmroutine vorzugsweise dann durchgeführt, wenn die Chipkarte eine Antwortnachricht (R-APDU; "Response Application Protocol Data Unit") an eine externe Kommunikationseinrichtung, z.B. ein Schreib-/Lesegerät geschickt hat, und auf die nächste Anfragenachricht (C-APDU; "Command Application Protocol Data Unit") der Kommunikationsvorrichtung wartet, also zwischen einer Beantwortung einer Anfrage durch die Chipkarte und der nächsten Anfrage der externen Kommunikationsvorrichtung. Die Kommunikation des Datenträgers mit einer externen Kommunikationsvorrichtung wird dabei vorzugsweise von einer Kommunikationseinrichtung des Datenträgers durchgeführt, die eine Kommunikationsverbindung zu der externen Kommunikationsvorrichtung aufbaut und eine Datenkommunikation über eine entsprechende Kommunikationsschnittstelle des Datenträgers mit der externen Kommunikationsvorrichtung durchführt. Die Überwachungseinrichtung steht mit der Kommunikationseinrichtung in Kontakt, um das Senden einer Antwortnachricht bzw. das Empfangen einer Anfragenachricht ausreichend zu erkennen.

Falls die Überwachungseinrichtung das Eintreten eines vorgegebenen Ereignisses auf dem Datenträger der Echtzeitsteuerung durch ein Auslösesignal mitteilt, kann die Echtzeitsteuerung eine bestimmte, Echtzeitzeitspanne ab Eintreten des Ereignisses mithilfe der fortlaufend sequentiellen Ausführung der ausgewählten Programmroutine abmessen und anschließend über die Ausführungsdauer des entsprechenden echtzeitkonstanten Prozesses den Ablauf dieser Echtzeitspanne erkennen.

Bei einer bevorzugten Ausführungsform wird die Beendigung der Ausführung eines einzelnen echtzeitkonstanten Prozesses durch eine Unterbrechung (" Interrupt") - vorzugsweise durch eine Hardware-Unterbrechung - ausgelöst, woraufhin die zugehörige Unterbrechungsroutine (ISR; "Interrupt Service Routine") den Zählerstand eines in einem Speicher des Datenträgers eingerichteten Zeitzählers inkrementiert. Danach wird die fortlaufend sequentielle Ausführung des echtzeitkonstanten Prozesses mit dem erneuten Aufruf der Programmroutine fortgesetzt. Der Zeitzähler protokolliert somit die Anzahl der Ausführungen der Programmroutine als echtzeitkonstanten Prozess. Aus dem aktuellen Zählerstand des Zeitzählers kann die Echtzeitsteuerung die verstrichene Zeit bestimmen, indem der aktuelle Zählerstand des Zeitzählers ausgelesen und mit der konstanten Ausführungsdauer des echtzeitkonstanten Prozesses multipliziert wird.

Auf diese Weise kann in einem Speicher des Datenträgers ein Betriebszeitzähler eingerichtet werden, dessen Zählerstand die Anzahl der fortlaufend sequentiell wiederholten Ausführungen der Programmroutine seit der letzten Inbetriebnahme des Datenträgers wiedergibt, sofern die Echtzeitsteuerung die fortlaufend sequentielle Ausführung der Programmroutine beginnt, sobald an dem Datenträger eine Versorgungsspannung anliegt. Das Inkrementieren eines derartigen Betriebszeitzählers kann hierbei wieder durch eine (Hardware-) Unterbrechung eingeleitet werden. In jedem Falle kann ein Datenträger eine Echtzeitspanne mittels der Echtzeitsteuerung nur messen, wenn er eine Versorgungsspannung (Vcc) und ein Taktsignal (CLK) von einer externen Kommunikationsvorrichtung, z.B. einem Schreib-/Lesegerät, empfängt.

Prinzipiell können in einem Speicher des Datenträgers beliebig viele verschiedene Zeitzähler unabhängig voneinander angelegt werden, die zur Bestimmung einer Vielzahl von unterschiedlichen Echtzeitspannen, z.B. ausgehend von unterschiedlichen datenträgerintemen Ereignissen, z.B. verschiedenen Softwarelizenzen oder Zugangsberechtigungen, verwendet werden. Die fortlaufend sequentielle Ausführung des echtzeitkonstanten Prozesses wir dabei vorzugsweise in einer einzigen Programmschleife durchgeführt, die die Zeitbasis für alle Zähler bildet, wobei die verschiedenen Zähler unabhängig voneinander durch entsprechende Unterbrechungsroutinen inkrementiert werden.

Einer dieser unabhängigen Zeitzähler, insbesondere der Betriebszeitzähler, kann als Referenzzeitzähler des Datenträgers eingesetzt werden, von dem weitere Zeitzähler abgeleitet werden können, indem ein Zählerstand eines abgeleiteten Zeitzählers auf dem jeweiligen aktuellen Zählerstand des Referenz- oder Betriebszeitzählers basiert. Dies kann derart durchgeführt werden, dass ein abgeleiteter Zeitzähler um die Differenz der Zählerstände des Betriebszeitzählers zwischen zwei Aktualisierungszeitpunkten inkrementiert wird.

Zur Inkrementierung des Zählerstands des Betriebszeitzählers wird vorzugsweise nach jeder einzelnen Ausführung des echtzeitkonstanten Prozesses eine Unterbrechung ausgelöst, so dass die zugehörige Unterbrechungsroutine den Zählerstand des Betriebszeitzählers inkrementiert. Auch zur Aktualisierung des Zählerstandes eines abgeleiteten Zeitzählers wird vorzugsweise eine Unterbrechung ausgelöst, wobei die entsprechende Unterbrechungsroutine den Zählerstand des betreffenden abgeleiteten Zeitzählers basierend auf dem aktuellen Zählerstand des Betriebszeitzählers bzw. basierend auf dessen Differenz zu dem Zählerstand des Betriebszeitzählers bei der letzten Aktualisierung aktualisiert. Hierbei ist der Datenträger vorzugsweise derart eingerichtet, dass die Unterbrechungen auch in einem stromsparenden Modus des Datenträgers ausgelöst werden.

In einer besonders bevorzugten Ausführungsform wird ein Datenträger bereitgestellt, der eine Echtzeitspanne in einer unmanipulierbaren Art und Weise bestimmt, so dass insbesondere die Betriebszeit ("Power-up-Zeit") des Datenträgers nicht von außen manipuliert werden kann. Dazu wird der portable Datenträger als Sicherheitsdatenträger, insbesondere als "Security IC" (SIC) oder Smart Card ausgestaltet, der z.B. besonders gesicherte Kommunikationsverbindungen zu einer externen Kommunikationsvorrichtung unterstützt. Die Zeitzähler, insbesondere der Betriebszeitzähler, werden in einem nicht-volatilen Speicher als persistente Zähler bzw. Datenstrukturobjekte eingerichtet, die gesondert gegen ein Auslesen von außen gesichert werden können.

Es ist auch möglich, dass der Betriebszeitzähler mittels eines externes Zeitsynchronisationssignals synchronisiert wird, das die Echtzeitsteuerung über die Kommunikationsschnittstelle von einer externen Kommunikationsvorrichtung empfängt. Sofern dieses Zeitsynchronisationssignal eine Echtzeit umfasst, kann diese von der Echtzeitsteuerung in die Zeitbasis des Datenträgers, d.h. die Ausführungsdauer des echtzeitkonstanten Prozesses, umgerechnet werden und zur Aktualisierung und Synchronisierung der Zeitzähler dienen. Bei regelmäßigem Empfang eines Synchronisationssignals (z.B. einige Minuten oder jede Stunde) kann das Zeitintervall zwischen zwei Synchronisationssignalen in die Zeitbasis des Datenträgers, d.h. in die Ausführungsdauer des echtzeitkonstanten Prozesses, umgerechnet werden und zur etwaigen Korrektur der Betriebszeitzählers verwendet werden. Durch die Synchronisierung wird die Genauigkeit der internen Zeitmessung verbessert.

Die Echtzeitsteuerung kann ferner dazu eingerichtet sein, die Zählerstände der Zeitzähler, insbesondere des Betriebszeitzählers, durch die Überwachungseinrichtung auf Überschreiten eines vorgegebenen Zählerstands überwachen zu lassen, und bei Vorliegen einer Zählerstandüberschreitung über die Kommunikationseinrichtung des Datenträgers ein entsprechendes Benachrichtigungssignal an eine externe Kommunikationsvorrichtung zu senden. Dies kann beispielsweise den Ablauf einer Lizenzdauer oder einer Zugangsberechtigung betreffen. Der Datenträger gibt dadurch lediglich preis, dass ein vorgegebener Zählerstand erreicht und insofern eine vorgegebene Echtzeitspanne überschritten wurde. In ähnlicher Weise kann die Echtzeitsteuerung mittels der Kommunikationseinrichtung die vollständige Betriebszeit des Datenträgers basierend auf dem aktuellen Zählerstand des Betriebszeitzählers mittels eines Betriebszeitsignals an eine externe Kommunikationsvorrichtung senden.

Hierbei wird sämtliche Datenkommunikation des Datenträgers, die eine Echtzeitbestimmung oder Synchronisierung betrifft, vorzugsweise besonders abgesichert durchgeführt, indem die Kommunikationseinrichtung vor der Datenkommunikation eine sichere Kommunikationsverbindung zu der externen Kommunikationsvorrichtung aufbaut. Zusätzlich oder alternativ kann eine derartige Datenkommunikation mit einer externen Kommunikadonsvorrichtung durch eine Verschlüsselung kryptographisch gesichert werden oder zumindest signiert werden, um den Datenträger gegenüber der externen Kommunikationsvorrichtung zu authentisieren.

Weitere Merkmale der Erfindung ergeben sich aus der folgenden Beschreibung verschiedener erfindungsgemäßer Ausführungsbeispiele und Ausführungsalternativen. Es wird auf die folgenden Figuren verwiesen, welche zeigen:
- Fig.1: eine schematische Übersicht des erfindungsgemäßers Verfahrens; und
- Fig. 2: einen erfindungsgemäß eingerichteten portablen Datenträger zum Ausführen des Verfahrens nach Fig. 1.

Portable Datenträger, wie z.B. Chipkarten, Smart Cards, sichere Multimedia-Karten (MMC), Mobilfunkkarten oder dergleichen, benötigen für viele Anwendungen eine Echtzeitbasis, um Zeitspannen in der natürlichen Echtzeit in Millisekunden, Sekunden, Stunden etc. als so genannte Echtzeitspannen messen oder abgleichen zu können. Hierfür eignet sich weder ein internes Taktsignal noch ein von außerhalb des Datenträgers an diesen angelegtes externes Taktsignal, da einerseits die entsprechenden Taktraten variabel und abhängig von einem externen Schreib-/Lesegerät sein können, mit dem ein portabler Datenträger in Kontakt steht, und andererseits derartige Taktsignale nicht in jedem Fall in eine Echtzeit umzurechnen sind. Anwendungen, die die Bestimmung einer Echtzeitspanne erfordern sind z.B. die Bestimmung der Betriebszeit des portablen Datenträgers, die Steuerung zeitabhängiger Lizenzen auf dem Datenträger oder auch die Echtzeiterfassung mittels des Datenträgers, z.B. um Arbeitszeiten oder Login-Zeiten eines Benutzers protokollieren zu können. Bei den meisten dieser Anwendungen ist es darüber hinaus notwendig, eine Manipulation von Echtzeitmessungen und deren Ergebnissen weitestgehend ausschließen zu können, weil mit den Zeitmessungen zumeist auch sicherheitsrelevante und/oder finanzielle Konsequenzen verbunden sind.

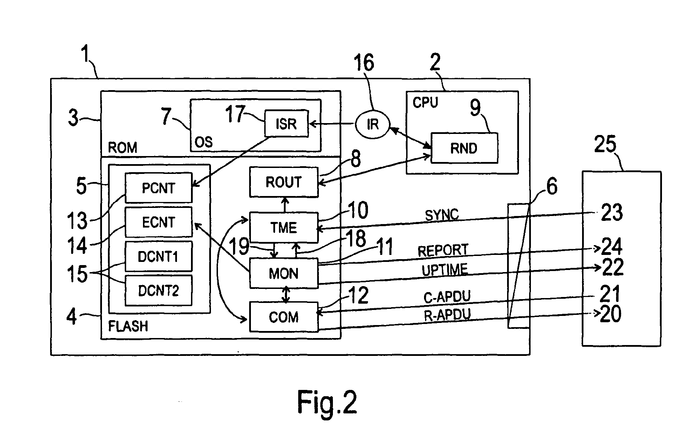

Die Grundlage einer derartigen Funktionalität eines portablen Datenträgers ist bei der in Fig. 2 gezeigten Chipkarte 1 die besonders ausgestaltete Programmroutine 8 (ROUT, die von einem Prozessor 2 (CPU) als echtzeitkonstanter Prozess 9 (RND) ausgeführt werden kann.

Da die Ausführungsdauer *t* des echtzeitkonstanten Prozesses 9 bekannt ist, kann durch eine fortlaufend sequentiell wiederholte Ausführung des echtzeitkonstanten Prozesses 9 eine längere Echtzeitspanne abgemessen werden.

Bei der vorliegenden Ausführungsform der Erfindung wird als erfindungsgemäße Programmroutine 8 die Zufallszahlengenerierung (RND) verwendet, die den Vorteil hat, dass sie auf den meisten portablen Datenträgern als Funktion ohnehin vorhanden ist und deshalb nicht separat implementiert werden muss. Insbesondere notwendig ist, dass derartige Programmroutinen 8 keine Schreibzugriffe auf einen Speicher 5 des Datenträgers 1 durchführen, die die Ausführungsdauer der betreffenden Programmroutine 8 verzögern können.

Die Chipkarte 1 umfasst neben dem Prozessor 2 eine Kommunikationseinrichtung 12 (COM) und eine Kommunikationsschnittstelle 6 zur Kommunikation mit einer externen Kommunikationsvorrichtung, z. B. einem Schreib-/Lesegerät 25 oder dergleichen, sowie eine Speicheranordnung, die zumindest einen permanenten ROM-Speicher 3 sowie einen nicht-flüchtigen Speicher umfasst, z.B. einen EEPROM-Speicher oder einen Flash-Speicher 4 (FLASH). Darüber besitzt die Chipkarte 1 auch einen flüchtigen (RAM-) Arbeitsspeicher (nicht dargestellt). Die grundlegenden Funktionen der Chipkarte 1 werden von einem Chipkartenbetriebssystem 7 (OS) bereitgestellt, das in der Regel im ROM-Speicher 3 abgelegt ist. Darüber hinaus befinden sich im Flash-Speicher 4 weitere Programmroutinen oder Applikationen 10, 11, 12, die bei Bedarf auf dem Prozessor 2 ausgeführt werden können, sowie vielfältige persistent zu speichernde Daten bzw. Datenstrukturen 13,14,15.

In dem Flash-Speicher 4 befinden sich insbesondere die als echtzeitkonstanter Prozess 9 ausführbare Programmroutine 8, sowie eine Echtzeitsteuerung 10 (TME), eine Überwachungseinrichtung 11 (MON) und eine Kommunikationseinrichtung 12 (COM), die alle als von dem Prozessor 2 ausführbare Applikationen vorliegen. Zwischen diesen Komponenten 10,11,12 findet eine vielfältige Kommunikation in Form von Programmaufrufen und Signalen statt, beispielsweise mittels des Auslösesignals 18 des Beendigungssignals 19 zwischen der Überwachungseinrichtung 11 und der Echtzeitsteuerung 10, der Antwortnachricht 20 und der Anfragenachricht 21 zwischen der Kommunikationseinrichtung 12 und dem externen Schreib-/ Lesegerät 12, sowie dem Benachrichtigungssignal 22 und dem Synchronisationssignal 23 an das bzw. von dem Schreib-/Lesegerät 25.

In dem nicht-flüchtigen Flash-Speicher 4 der Chipkarte 1 ist ein besonders abgesicherter und manipulationsgeschützter Speicherbereich 5 eingerichtet, in welchem verschiedene Zeitzähler angelegt sind, die zur Echtzeitmessung basierend auf der Ausführung der Programmroutine 9 eingesetzt werden, z.B. ein Betriebszeitzähler 13 (PCNT), der ein Maß für die Gesamtbetriebszeit der Chipkarte 1 wiedergibt, ein oder mehrere Ereigniszeitzähler 14 (ECNT), die ein Maß für eine Zeitspanne seit dem Eintritt eines bestimmten internen Ereignisses der Chipkarte 1 wiedergeben, sowie mehrere abgeleitete Zeitzähler 15 (DCNT1, DTNC2), deren Zählerstände *n'* basierend auf den Zählerständen *n, m* des Betriebszeitzählers 13 oder eines Ereigniszeitzählers 14 ermittelt werden.

Das Betriebssystem 7 der Chipkarte 1 umfasst neben vielfältigen System- und Betriebsfunktionen auch eine oder mehrere Unterbrechungsroutinen 17 (ISR; "Interrupt Service Routine"), die bei Auftreten einer vorzugsweise Hardwaregesteuerten Unterbrechung 16 (IR), die einen aktuell von dem Prozessor 2 ausgeführten Prozess, z.B. den echtzeitkonstanten Prozess 9, unterbricht, eine prioritätshöhere zeitkritische Operation ausführt. Nach Ausführung der Unterbrechungsroutine 17 wird der unterbrochene Prozess fortgesetzt.

Die für die Zeitmessung maßgeblichen Funktionen der Chipkarte 1 werden von einem Sicherheitschip SIC ("Security IC") bereitgestellt, der Teil der Chipkarte 1 ist oder diese bildet. Sämtliche mit der Echtzeitmessung im Zusammenhang stehende Kommunikation zwischen der Chipkarte 1 bzw. deren Kommunikationseinrichtung 12 und einem externen Schreib-/ Lesegerät 25 ist darüber hinaus besonders gegen Manipulationen gesichert, beispielsweise durch Aufbauen eines sicheren Kommunikationskanals durch die Kommunikationseinrichtung 12 über die Kommunikationsschnittstelle 6 zu dem Schreib-/ Lesegerät 25 oder indem die übertragenen Daten (Signale, Nachrichten, etc.) durch eine kryptographische Einrichtung (nicht dargestellt) der Chipkarte 1 verschlüsselt oder zum Nachweis der Authentizität der Chipkarte 1 signiert werden.

Die nachfolgend beschriebene Echtzeitmessung kann die Chipkarte 1 mittels der Echtzeitsteuerung 10 und diversen Zeitzählern 13, 14, 15 nur dann vornehmen, wenn an der Chipkarte 1 sowohl eine Spannungsversorgung (Vcc) als auch ein Taktsignal (CLK) anliegt.

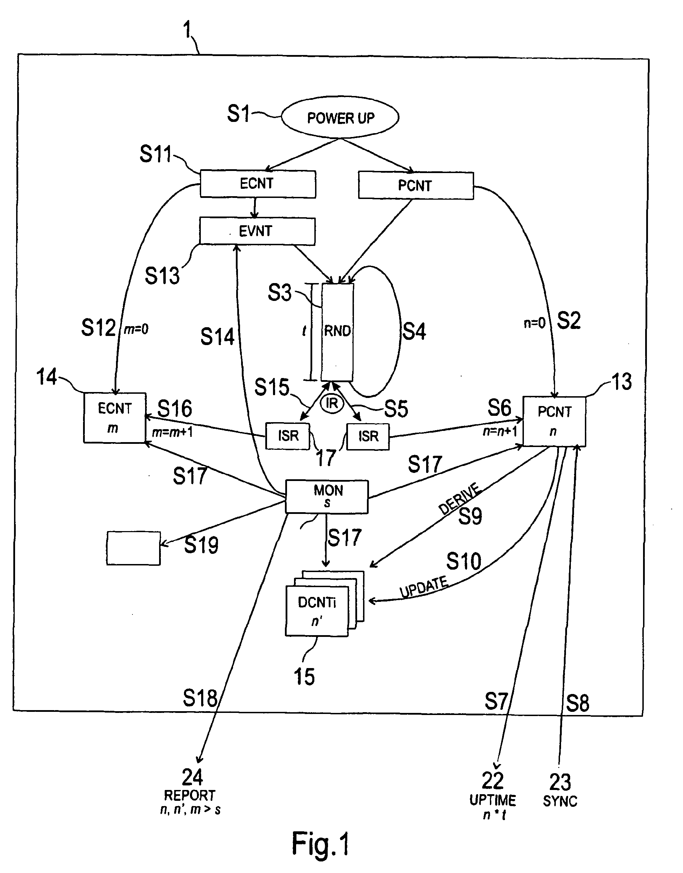

Die Funktionen und Interaktionen der geschilderten Komponenten und Einrichtungen einer derartigen Chipkarte 1 werden nachfolgend in Zusammenhang mit Figur 1 erläutert. Die Reihenfolge der angegebenen Schritte S1 bis S19 ist dabei nicht statisch zu verstehen, sondern kann sich je nach Betriebssituation ändern. Dabei können bestimmte Schritte insbesondere auch ganz entfallen oder (quasi-) parallel ausgeführt werden, sofern es die Abhängigkeiten der Schritte untereinander erlaubt.

Nach dem Einschalten (POWER UP) der Chipkarte 1 in Schritt S1, z.B. durch Bereitstellen einer Spannungsversorgung für die Chipkarte 1 durch ein externes Schreib-/ Lesegerät 25, richtet die Echtzeitsteuerung 10 in Schritt S2 möglichst unmittelbar danach einen Betriebszeitzähler 13 (PCNT) ein. Das Einrichten des Betriebszeitzählers 13 umfasst die Initialisierung (n = 0) eines als Datenstruktur in dem Flash-Speicher 4 der Chipkarte 1 bereits vorhandenen Betriebszeitzählers 13. Sobald der Betriebszeitzähler 13 initialisiert ist, startet die Echtzeitsteuerung 10 die Programmroutine 8, die dann von dem Prozessor 2 als echtzeitkonstanter Prozess 8, z.B. zum Erzeugen einer einzelnen Zufallszahl (RND), in Schritt S3 einmalig ausgeführt wird. Nach der Ausführungszeit *t* eines echtzeitkonstanten Prozesses 9 (üblicherweise einige Millisekunden) wird die Programmroutine 8 in Schritt S4 unmittelbar anschließend jeweils erneut als echtzeitkonstanter Prozess 9 gestartet, so dass sich durch die fortlaufend sequentiell wiederholte Ausführung der Programmroutine 8 durch die Echtzeitsteuerung 10 eine Endlosschleife in den Schritten S3, S4 ergibt, die vorzugsweise erst bei Ausschalten der Chipkarte 1, d.h. bei Abbrechen der Energieversorgung, beendet wird.

Aufgrund der fortlaufend sequentiellen Wiederholung des echtzeitkonstanten Prozesses 9 kann die Erzeugung einer Zufallszahl von der Chipkarte 1 als Zeitbasis verwendet werden, indem die Ausführungsdauer *t* als kleinste konstante Zeiteinheit mit der Echtzeit in Bezug gesetzt wird. Vorliegend erfordert die Erzeugung einer Zufallszahl durch den echtzeitkonstanten Prozess 9 z.B. *t* = 4 ms, so dass die Chipkarte 1 durch die Echtzeitsteuerung 10 Zeitspannen mit einer Genauigkeit von *t* = 4 ms messen kann. Demzufolge ist nach *n* = 250 fortlaufend sequentiellen Ausführungen des echtzeitkonstanten Prozesses 9 eine Sekunde vergangen.

Die Anzahl der Ausführungen des echtzeitkonstanten Prozesses 9 wird in dem eingangs initialisierten Betriebszeitzähler 13 protokolliert, indem die Beendigung jedes echtzeitkonstanten Prozesses 9 in Schritt S5 eine Unterbrechung 16 (IR) auslöst, woraufhin die zugehörige Unterbrechungsroutine 17 (ISR) den Betriebszeitzähler 13 in Schritt S6 inkrementiert (*n* = *n* + 1) und anschließend die Ausführung der Programmschleife S3, S4 fortsetzt. Die gesamte Betriebszeit der Chipkarte 1 wird dann von der Echtzeitsteuerung 10 als Produkt des Zählerstands *n* des Betriebszeitzählers 13 und der Echtzeitbasis *t* bestimmt (*n*t*). Die Betriebszeit *n*t* wird von der Echtzeitsteuerung 10 in Schritt S7 mit einem Betriebszeitsignal 22 über die Kommunikationseinrichtung 12 an das externe Schreib-/Lesegerät 25 gesendet (UPTIME), entweder in regelmäßigen Abständen oder auf Anforderung einer externen Stelle.

Ferner ist auch möglich, den Betriebszeitzähler 13 oder jeden beliebigen anderen Zeitzähler 14,15 in Schritt S8 von außen zu synchronisieren (SYNC), indem das Schreib-/Lesegerät 25 ein Synchronisationssignal 23 über die Kommunikationsschnittstelle 6 an die Echtzeitsteuerung 10 schickt. Das Synchronisationssignal 23 des Schreib-/Lesegeräts 25 kann beispielsweise auf einer externen Echtzeitquelle beruhen und regelmäßig, z.B. in Intervallen von einigen Minuten, an die Chipkarte 1 gesendet werden. Falls das Synchronisationssignal 23 z.B. in Abständen von fünf Minuten bei der Chipkarte 1 eingeht, kann die Echtzeitsteuerung 10 prüfen, ob der Vergleich des aktuellen Zählerstands des Betriebszeitzählers 13 und des Zählerstands beim letzten empfangenen Synchronisationssignal 23 einer Echtzeitspanne von fünf Minuten entspricht. Bei Bedarf kann der Zählerstand *n* korrigiert werden. Auf diese Weise lässt sich ein bestimmtes Maß an Genauigkeit der Zeitzähler 13, 14, 15 sicherstellen, selbst wenn die Ausführung der Schleife S3, S4 zeitliche Inkonstanzen aufweist, die möglicherweise aus einer Auslastung des Prozessors 2 resultieren.

Bei einigen Anwendungen wird eine lediglich ungenaue Zeitmessung benötigt. Dann kann es ausreichend sein, dass die Echtzeitsteuerung 10 die fortlaufend sequentielle Wiederholung des echtzeitkonsistenten Prozesses 9 in der Schleife S3, S4 nur während solcher Zeiten durchführt, in denen der Prozessor 2 keine signifikante Auslastung besitzt. Ein solcher Zustand liegt bei der Chipkarte 1 insbesondere bei der Wartezeit zwischen dem Senden einer Antwortnachricht 20 (Response-APDU) auf eine frühere Anfragenachricht des Schreib-/ Lesegeräts 25 und dem Empfang der nächsten Anfragenachricht 21 (Command-APDU) des Schreib-/Lesegeräts 25 vor. Die fortlaufend sequentielle Wiederholung des echtzeitkonstanten Prozesses 9 wird also durch die Echtzeitsteuerung 10 nach Aussenden der Antwortnachricht 20 durch die Kommunikationseinrichtung 12 gestartet und nach Erhalt der darauf folgenden Anfragenachricht 21 wieder beendet. Eine derartige temporäre Ausführung des echtzeitkonstanten Prozesses 9 hat jedoch zur Folge, dass die Zeitmessung bei ansteigender Kommunikation zwischen der Chipkarte 1 und dem Schreib-/Lesegerät 25 entsprechend schlechter wird. Mit heuristischen Verfahren kann das Ergebnis einer solchen temporären, ungenauen Zeitmessung jedoch abhängig von einer geschätzten Auslastung des Prozessors auf die Gesamtbetriebszeit hochgerechnet werden. In diesem Zusammenhang ist es bei der in Fig. 2 gezeigten Chipkarte 1 vorteilhaft, dass der echtzeitkonstante Prozess 9 auch in einem stromsparenden Modus der Chipkarte 1 fortlaufend sequentiell wiederholt werden kann, da das Auslösen einer Unterbrechung 16 nach Beendigung eines einzelnen echtzeitkonstanten Prozesses 9 auch in dem stromsparenden Modus der Chipkarte 1 möglich ist.

Prinzipiell kann die Echtzeitsteuerung 10 basierend auf der durch die Programmschleife S3, S4 gegebene Echtzeitbasis eine beliebige Anzahl von parallelen oder abgeleiteten Zeitzählern 15 (DCNT*i*) einrichten, deren jeweilige Zählerstände *n'* unabhängig voneinander durch entsprechende Unterbrechungen 16 und Unterbrechungsroutinen 17 inkrementiert oder aktualisiert werden. In Schritt S9 wird ausgehend von dem Betriebszeitzähler 13 eine beliebige Anzahl von weiteren Zeitzählern 15 (DCNT*i*) abgeleitet (DERIVE), deren jeweilige Zählerstände *n'* nicht unmittelbar von der fortlaufend sequentiellen Ausführung des echtzeitkonstanten Prozesses 9 in der Schleife S3, S4 abhängen, sondern lediglich basierend auf einem aktuellen Zählerstand *n* des Betriebszeitzählers 13 bei Bedarf in Schritt S10 aktualisiert werden (UPDATE).

Diese Aktualisierung kann durch eine interne Aktualisierungsroutine (nicht dargestellt) des Datenträgers 1 z.B. bei Vorliegen einer bestimmten Aktualisierungsbedingung durchgeführt werden. So kann beispielsweise ein abgeleiteter Zähler 15 zur Arbeitszeitmessung bei Beginn der Arbeit eingerichtet und initialisiert werden und in regelmäßigen größeren Zeitintervallen, während einer Arbeitspause oder bei Beendigung der Arbeit mit der Differenz der Zählerstände des Betriebszeitzählers 13 zu Beginn und zu Beendigung der Arbeit in Schritt S10 aktualisiert werden. Die Aktualisierung eines abgeleiteten Zeitzählers 15 braucht nicht durch Unterbrechungen angestoßen zu werden, da keine zeitkritische Operation hoher Priorität vorliegt.

Neben dem bei Einschalten der Chipkarte in Schritt S2 angelegten Betriebszeitzähler 13 kann die Echtzeitsteuerung 10 eine beliebige Anzahl von weiteren parallelen Zeitzählern 14,15 einrichten. Z.B. kann ein Ereigniszeitzähler 14 (ECHT) in Schritt S11 in der Chipkarte 1 eingerichtet und in Schritt S12 initialisiert werden (m = 0). Der Ereigniszeitzähler wird beginnend mit dem Auftreten des betreffenden Ereignisses (EVNT) in Schritt S13, das durch die Überwachungseinrichtung 11 in Schritt S14 erkannt wird, sukzessive inkrementiert.

Nach Auftreten des Ereignisses in Schritt S13 kann der Ereigniszeitzähler 14 basierend auf der bereits für den Betriebszeitzähler 13 begonnenen fortlaufend sequentiellen Wiederholung des echtzeitkonstanten Prozesses 9 in den Schritten S3, S4 aktualisiert werden. Entsprechend wird der Ereigniszeitzähler 14 bei Beendigung jedes einzelnen echtzeitkonstariten Prozesses 9 nach Auftreten des Ereignisses durch eine Unterbrechung 16 in Schritt S15 und durch eine entsprechende Unterbrechungsroutine 17 in Schritt S16 (*m* = *m* +1) aktualisiert.

Die Überwachungseinrichtung 11 der Chipkarte 1 kann sämtliche Zeitzähler 13, 14, 15 überwachen und bei Überschreiten (*n*, *n', m* > *s*) eines vorgegebenen Schwellenzählerstandes *s* eines der Zeitzähler 13, 14, 15 diesen in Schritt S18 als Benachrichtigungssignal 24 an die externe Schreib-/Leseeinrichtung 25 senden (REPORT) oder in Schritt S19 einen weiteren Prozess anstoßen, der in Reaktion auf den entsprechenden Zählerstand ausgeführt wird.

## Patentansprüche

1. Verfahren zum Bestimmen einer Echtzeitspanne in einem portablen Datenträger (1), wobei die Echtzeitspanne als Vielfaches der im wesentlichen konstanten Ausführungsdauer (*t*) eines echtzeitkonstanten Prozesses (9) auf dem Datenträger (1) bestimmt wird, wobei der echtzeitkonstante Prozess (9) nicht auf einen Speicher (4) des Datenträgers (1) zugreift, **dadurch gekennzeichnet, dass** als echtzeitkonstanter Prozess (9) ein Prozess zum Erzeugen zumindest einer Zufallszahl ausgeführt wird (S3).

2. Verfahren nach Anspruch 1, **dadurch gekennzeichnet, dass** eine Ausführung (S3) des echtzeitkonstanten Prozesses (9) fortlaufend sequentiell wiederholt wird (S4), solange auf dem Datenträger (1) kein von dem echtzeitkonstanten Prozess (9) verschiedener Prozess ausgeführt wird.

3. Verfahren nach Anspruch 2, **dadurch gekennzeichnet, dass** eine Ausführung (S3) des echtzeitkonstanten Prozesses (9) zwischen einem Senden einer Antwortnachricht (20) des Datenträgers (1) an eine externe Kommunikationseinrichtung (25) und einem Empfangen einer nächsten Anfragenachricht (21) durch den Datenträger (1) fortlaufend sequentiell wiederholt (S4) wird.

4. Verfahren nach Anspruch 1, **dadurch gekennzeichnet, dass** eine Ausführung (S3) des echtzeitkonstanten Prozesses (9) beginnend mit einem Eintreten eines vorgegebenen Ereignisses (S13) auf dem Datenträger (1) fortlaufend sequentiell wiederholt (S4) wird.

5. Verfahren nach einem der Ansprüche 2 bis 4, **dadurch gekennzeichnet, dass** die Anzahl der Ausführungen des echtzeitkonstanten Prozesses (9) als Zählerstand (*n, n', m*) eines Zeitzählers (13,14,15) des Datenträgers (1) protokolliert wird, indem nach jeder Ausführung (S3) des echtzeitkonstanten Prozesses (9) eine Unterbrechung (16) ausgelöst wird (S5, S15) und der Zeitzähler (13, 14,15) durch eine entsprechende Unterbrechungsroutine (17) inkrementiert wird (S6, S16).

6. Verfahren nach Anspruch 4 und 5, **dadurch gekennzeichnet, dass** eine beginnend mit dem vorgegebenen Ereignis verstrichene Echtzeitspanne bestimmt wird, indem der aktuelle Zählerstand (*n*, *n', m*) eines Zeitzählers (13, 14, 15) mit der konstanten Ausführungsdauer (*t*) des echtzeitkonstanten Prozesses (9) multipliziert wird.

7. Verfahren nach Anspruch 1, **dadurch gekennzeichnet, dass** eine Ausführung (S3) des echtzeitkonstanten Prozesses (9) fortlaufend sequentiell wiederholt wird (S4), sobald der Datenträger (1) eingeschaltet wird (S1), und die Anzahl der Ausführungen (S3) des echtzeitkonstanten Prozesses (9) als Zählerstand (n) eines Betriebszeitzählers (13) des Datenträgers (1) protokolliert wird (S5, S6).

8. Verfahren nach Anspruch 7, **dadurch gekennzeichnet, dass** zum Inkrementieren (S6) des Zählerstands (n) des Betriebszeitzählers (13) eine Unterbrechung (16) ausgelöst wird (S5) und der Zählerstand (n) des Betriebszeitzählers (13) durch eine entsprechende Unterbrechungsroutine (17) inkrementiert wird (S6), wobei die Unterbrechung (16) auch in einem Stromsparmodus des Datenträgers (1) auslösbar ist.

9. Verfahren nach Anspruch 7 oder 8, **dadurch gekennzeichnet, dass** von dem Betriebszeitzähler (13) eine Vielzahl von weiteren Zeitzählern (15) abgeleitet werden kann (S9), deren jeweilige Zählerstände (n') basierend auf dem Zählerstand (n) des Betriebszeitzählers (13) aktualisiert werden (S10).

10. Verfahren nach einem der Ansprüche 7 bis 9, **dadurch gekennzeichnet, dass** der Betriebszeitzähler (13) mit einem externen Zeitsynchronisationssignal (23) einer externen Kommunikationsvorrichtung (25) synchronisiert wird (S8).

11. Verfahren nach einem der Ansprüche 7 bis 10, **dadurch gekennzeichnet, dass** ein Betriebszeitsignal (24) an eine externe Kommunikationsvorrichtung (25) gesendet wird, das die sich aus einer Multiplikation des aktuellen Zählerstands (n) des Betriebszeitzählers (13) mit der Ausführungsdauer (t) des echtzeitkonstanten Prozesses (9) ergebende Betriebszeit (*n***t*) des Datenträgers (1) angibt (S7).

12. Verfahren nach einem der Ansprüche 7 bis 11, **dadurch gekennzeichnet, dass** bei Überschreiten eines vorgegebenen Zählerstandes (s) eines Zeitzählers (13, 14, 15) ein Benachrichtigungssignal (24) an eine externe Kommunikationsvorrichtung (25) gesendet wird (S18), das angibt, dass der betreffende Zeitzähler (13, 14, 15) den vorgegebenen Zählerstand (s) überschritten hat.

13. Verfahren nach einem der Ansprüche 1 bis 12, **dadurch gekennzeichnet, dass** das Verfahren auf einem manipulationssicheren Datenträger (1) ausgeführt wird, insbesondere auf einer Smart Card.

14. Portabler Datenträger (1) umfassend zumindest einen Speicher (4), einen Prozessor (2) zum Ausführen einer auf dem Datenträger (1) vorliegenden Programmroutine (8) als Prozess (9) und eine Kommunikationseinrichtung (12) zur Datenkommunikation mit einer externen Kommunikationsvorrichtung (25) über eine Kommunikationsschnittstelle (6) des Datenträgers (1), wobei die Programmroutine (8) ausgestaltet ist, von dem Prozessor (2) als echtzeitkonstanter Prozess (9) mit einer im wesentlichen konstanten Ausführungsdauer (t) ausgeführt zu werden, und durch eine Echtzeitsteuerung (10), die eingerichtet ist, die Ausführung der Programmroutine (8) als echtzeitkonstanter Prozess (9) durch den Prozessor (2) zu bewirken und eine Echtzeitspanne als Vielfaches der Ausführungsdauer (t) des echtzeitkonstanten Prozesses (9) zu bestimmen, wobei die Programmroutine (8) ausgestaltet ist, bei einer Ausführung durch den Prozessor (2) als echtzeitkonstanter Prozess (9) nicht auf den zumindest einen Speicher (4) des Datenträgers (1) zuzugreifen, **dadurch gekennzeichnet, dass** die Programmroutine (8) ausgestaltet ist, bei ihrer Ausführung als echtzeitkonstanter Prozess (9) durch den Prozessor (2) zumindest eine Zufallszahl zu erzeugen.

## Claims

1. A method for determining a real-time span in a portable data carrier (1), wherein the real-time span is determined as a multiple of the substantially constant execution time (t) of a real-time constant process (9) on the data carrier (1), wherein the real-time constant process (9) does not access a memory (4) of the data carrier (1), **characterized in that** as the real-time constant process (9) there is executed (S3) a process for generating at least one random number.

2. The method according to claim 1, **characterized in that** an execution (S3) of the real-time constant process (9) is consecutively sequentially repeated (S4) as long as no process different from the real-time constant process (9) is executed on the data carrier (1).

3. The method according to claim 2, **characterized in that** an execution (S3) of the real-time constant process (9) is consecutively sequentially repeated (S4) between a sending of a response message (20) of the data carrier (1) to an external communication device (25) and a receiving of a next request message (21) by the data carrier (1).

4. The method according to claim 1, **characterized in that** an execution (S3) of the real-time constant process (9) is consecutively sequentially repeated (S4) beginning with an occurrence of a specified event (S13) on the data carrier (1).

5. The method according to any of claims 2 to 4, **characterized in that** the number of executions of the real-time constant process (9) is logged as the counter reading (n, n', m) of a time counter (13, 14, 15) of the data carrier (1) by an interruption (16) being triggered (S5, S15), and the time counter (13, 14, 15) being incremented (S6, S16) by a corresponding interruption routine (17), after each execution (S3) of the real-time constant process (9).

6. The method according to claims 4 and 5, **characterized in that** a real-time span that has lapsed beginning with the specified event is determined by the current counter reading (n, n', m) of a time counter (13, 14, 15) being multiplied by the constant execution time (t) of the real-time constant process (9).

7. The method according to claim 1, **characterized in that** an execution (S3) of the real-time constant process (9) is consecutively sequentially repeated (S4) as soon as the data carrier (1) is switched on (S1), and the number of executions (S3) of the real-time constant process (9) is logged (S5, S6) as the counter reading (n) of an up-time counter (13) of the data carrier (1).

8. The method according to claim 7, **characterized in that** for incrementing (S6) the counter reading (n) of the up-time counter (13), an interruption (16) is triggered (S5) and the counter reading (n) of the up-time counter (13) is incremented (S6) by a corresponding interruption routine (17), whereby the interruption (16) can also be triggered in a power-saving mode of the data carrier (1).

9. The method according to claim 7 or 8, **characterized in that** there can be derived (S9) from the up-time counter (13) a multiplicity of further time counters (15) whose respective counter readings (n') are updated (S10) on the basis of the counter reading (n) of the up-time counter (13).

10. The method according to any of claims 7 to 9, **characterized in that** the up-time counter (13) is synchronized (S8) with an external time synchronization signal (23) of an external communication apparatus (25).

11. The method according to any of claims 7 to 10, **characterized in that** there is sent to an external communication apparatus (25) an up-time signal (24) which indicates (S7) the up-time (n*t) of the data carrier (1) resulting from a multiplication of the current counter reading (n) of the up-time counter (13) by the execution time (t) of the real-time constant process (9).

12. The method according to any of claims 7 to 11, **characterized in that** when a specified counter reading (s) of a time counter (13, 14, 15) is exceeded, there is sent (S18) to an external communication apparatus (25) a notification signal (24) which indicates that the respective time counter (13, 14, 15) has exceeded the specified counter reading (s).

13. The method according to any of claims 1 to 12, **characterized in that** the method is executed on a tamper-resistant data carrier (1), in particular on a smart card.

14. A portable data carrier (1) comprising at least one memory (4), a processor (2) for executing as a process (9) a program routine (8) present on the data carrier (1), and a communication device (12) for data communication with an external communication apparatus (25) via a communication interface (6) of the data carrier (1), wherein the program routine (8) is configured to be executed by the processor (2) as a real-time constant process (9) with a substantially constant execution time (t), and by a real-time controller (10) which is adapted to cause the execution of the program routine (8) as a real-time constant process (9) by the processor (2) and to determine a real-time span as a multiple of the execution time (t) of the real-time constant process (9), wherein the program routine (8) is configured not to access the at least one memory (4) of the data carrier (1) upon an execution by the processor (2) as a real-time constant process (9), **characterized in that** the program routine (8) is configured to generate at least one random number upon its execution as a real-time constant process (9) by the processor (2).

## Revendications

1. Procédé destiné à déterminer un intervalle de temps réel dans un support de données (1) portable, l'intervalle de temps réel étant déterminé comme un multiple de la durée d'exécution (t) sensiblement constante d'un processus (9) constant en temps réel sur le support de données (1), le processus (9) constant en temps réel n'accédant pas à une mémoire (4) du support de données (1), **caractérisé en ce qu'**un processus destiné à générer au moins un nombre aléatoire est exécuté (S3) en tant que processus (9) constant en temps réel.

2. Procédé selon la revendication 1, **caractérisé en ce qu'**une exécution (S3) du processus (9) constant en temps réel est réitérée (S4) en continu de manière séquentielle, tant qu'aucun procédé différent du processus (9) constant en temps réel n'est exécuté sur le support de données (1).

3. Procédé selon la revendication 2, **caractérisé en ce qu'**une exécution (S3) du processus (9) constant en temps réel est réitérée (S4) en continu de manière séquentielle entre une émission d'un message de réponse (20) du support de données (1) vers un dispositif de communication (25) externe et une réception d'un message d'interrogation (21) suivant par le support de données (1).

4. Procédé selon la revendication 1, **caractérisé en ce qu'**une exécution (S3) du processus (9) constant en temps réel, commençant avec la survenance d'un événement (S13) prédéfini, est réitérée (S4) en continu de manière séquentielle sur le support de données (1).

5. Procédé selon l'une quelconque des revendications 2 à 4, **caractérisé en ce que** le nombre d'exécutions du processus (9) constant en temps réel est consigné, en tant que position de compteur (n, n', m) d'un compteur horaire (13, 14, 15) du support de données (1), en déclenchant (55, S15) une interruption (16) après chaque exécution (S3) du processus (9) constant en temps réel, et le compteur horaire (13, 14, 15) est incrémenté (S6, S16) par une routine d'interruption (17) correspondante.

6. Procédé selon les revendications 4 et 5, **caractérisé en ce qu'**un intervalle de temps réel, qui s'est écoulé depuis la survenance de l'événement prédéfini, est déterminé en multipliant la position de compteur (n, n', m) actuelle d'un compteur horaire (13, 14, 15) par la durée d'exécution (t) constante du processus (9) constant en temps réel.

7. Procédé selon la revendication 1, **caractérisé en ce qu'**une exécution (S3) du processus (9) constant en temps réel est réitérée (S4) en continu de manière séquentielle dès que le support de données (1) est connecté (S1), et le nombre d'exécutions (S3) du processus (9) constant en temps réel est consigné (S5, S6) en tant que position de compteur (n) d'un compteur de temps de fonctionnement (13) du support de données (1).

8. Procédé selon la revendication 7, **caractérisé en ce que** pour l'incrémentation (S6) de la position de compteur (n) du compteur de temps de fonctionnement (13), une interruption (16) est déclenchée (S5) et la position de compteur (n) du compteur de temps de fonctionnement (13) est incrémentée (S6) par une routine d'interruption (17) correspondante, l'interruption (16) pouvant être déclenchée également dans un mode d'économie d'énergie du support de données (1).

9. Procédé selon la revendication 7 ou 8, **caractérisé en ce qu'**à partir du compteur de temps de fonctionnement (13) peut être dérivée (S9) une pluralité d'autres compteurs horaires (15), dont les positions de compteur (n') respectives sont actualisées (S10) sur la base de la position de compteur (n) du compteur de temps de fonctionnement (13).

10. Procédé selon l'une quelconque des revendications 7 à 9, **caractérisé en ce que** le compteur de temps de fonctionnement (13) est synchronisé (S8) avec un signal de synchronisation du temps (23) externe d'un dispositif de communication (25) externe.

11. Procédé selon l'une quelconque des revendications 7 à 10, **caractérisé en ce qu'**un signal de temps de fonctionnement (24) est émis vers un dispositif de communication (25) externe, qui indique (S7) le temps de fonctionnement (n*t) du support de données (1), résultant d'une multiplication de la position de compteur (n) actuelle du compteur de temps de fonctionnement (13) avec la durée d'exécution (t) du processus (9) constant en temps réel.

12. Procédé selon l'une quelconque des revendications 7 à 11, **caractérisé en ce qu'**en cas de dépassement au-dessus d'une position de compteur (s) prédéfinie d'un compteur horaire (13, 14, 15), un signal d'information (24) est émis (S18) vers un dispositif de communication (25) externe, qui indique que le compteur horaire (13, 14, 15) concerné est passé au-dessus du seuil supérieur de la position de compteur (s) prédéfinie du compteur.

13. Procédé selon l'une quelconque des revendications 1 à 12, **caractérisé en ce que** le procédé est exécuté sur un support de données (1) à manipulation sécurisée, en particulier sur une smart card.

14. Support de données (1) portable, comprenant au moins une mémoire (4), un processeur (2) destiné à exécuter en tant que processus (9) une routine de programme (8) présente sur le support de données (1), et une unité de communication (12) pour la communication des données avec un dispositif de communication (25) externe via une interface de communication (6) du support de données (1), la routine de programme (8) étant configurée pour être exécutée par le processeur (2) en tant que processus (9) constant en temps réel avec une durée d'exécution (t) sensiblement constante, et par une commande en temps réel (10) qui est configurée pour induire l'exécution de la routine de programme (8) en tant que processus (9) constant en temps réel par le processeur (2) et pour déterminer un intervalle de temps réel en tant que multiple de la durée d'exécution (t) du processus (9) constant en temps réel, ladite routine de programme (8) étant configurée pour ne pas accéder à ladite au moins une mémoire (4) du support de données (1) pendant une exécution en tant que processus (9) constant en temps réel par le processeur (2), **caractérisé en ce que** la routine de programme (8) est configurée pour générer au moins un nombre aléatoire pendant une exécution en tant que processus (9) constant en temps réel par le processeur (2).
